Europäisches Patentamt

**European Patent Office**

**Office européen des brevets**

(11) Numéro de publication: **0 090 790**

**B1**

(12) **FASCICULE DE BREVET EUROPÉEN**

(45) Date de publication du fascicule du brevet:
02.07.86

(21) Numéro de dépôt: **83870033.4**

(22) Date de dépôt: **24.03.83**

(51) Int. Cl.⁴: **F 27 B 9/24,** F 27 B 9/02,
C 21 D 1/76, F 27 D 7/04

(54) **Appareil pour le traitement thermique d'objets par convection.**

(30) Priorité: **25.03.82 FR 8205087**

(43) Date de publication de la demande:
**05.10.83 Bulletin 83/40**

(45) Mention de la délivrance du brevet:
**02.07.86 Bulletin 86/27**

(84) Etats contractants désignés:
**AT BE CH DE FR GB IT LI LU NL SE**

(56) Documents cité:
**DE-A-2 518 007**
**FR-A-1 393 921**
**FR-A-2 197 456**
**FR-A-2 420 109**
**US-A-4 012 190**
**US-A-4 298 341**

(73) Titulaire: **SOCIETE D'ETUDES ET INSTALLATIONS INDUSTRIELLES CNUD S.A., Rue des Palais, 59, B-1030- Bruxelles (BE)**

(72) Inventeur: **Der Erfinder hat auf seine Nennung verzichtet**

(74) Mandataire: **Plucker, Guy, OFFICE KIRKPATRICK 4 Square de Meeûs, B-1040 Bruxelles (BE)**

LIBER, STOCKHOLM 1986

EP 0 090 790 B1

## Description

La présente invention concerne un appareil de traitement thermique tel qu'une arche de recuisson à marche continue pour des corps creux distincts, en particulier pour des produits en verre creux tels des bouteilles, des pots, des bocaux, de la vaisselle, des tubes cathodiques pour T.V. etc...

Le traitement thermique, spécialement en vue de la recuisson, des produits en verre creux est réalisé en chauffant ceux-ci à la température de recuit, puis en les refroidissant progressivement. Un tel traitement se fait de manière classique dans un four-tunnel équipé d'un transporteur qui fait défiler les objets à traiter à travers celui-ci.

Le système apparemment le plus simple pour obtenir un refroidissement progressif est de faire circuler de l'air à contre-courant des corps à traiter en réglant le flux en fonction de la température régnant à un endroit déterminé du four. La pratique a révélé que même en opérant une régulation sur l'entrée de l'air et sur la sortie de celui-ci, on n'obtient pas une homogénéité thermique suffisante.

Un autre procédé consiste à faire passer les objets en verre à traiter à travers un four-tunnel, dans lequel circulent suivant une direction sensiblement verticale des courants de gaz (ou d'air) à la température désirée. Dans ces fours-tunnels, une ou plusieurs files longitudinales de motoventilateurs disposés à la partie supérieure et/ou à la partie inférieure ou bien dans la paroi latérale du tunnel entretiennent une circulation de gaz qui est transversale par rapport au sens de défilement du transporteur portant les objets à traiter.

Le gaz ainsi brassé est amené à la température voulue par des dispositifs de chauffage et/ou de refroidissement répartis sur la longueur du tunnel. Le plus souvent le traitement thermique est un chauffage ou un refroidissement programmé nécessitant un gaz chaud obtenu avec des brûleurs ou des résistances électriques. En règle générale, le gaz circule de bas en haut et le four comporte des zones successives dans chacune desquelles la température est réglable individuellement. Dans certains de ces fours-tunnels, des ventilateurs supérieurs et inférieurs alternent, de sorte que le flux d'air est alternativement ascendant et descendant. Quelques uns de ces fours sont formés de chambres contiguës qui communiquent chacune avec la ou les chambres voisines par une baie ménagée dans la cloison mitoyenne.

Du point de vue de la construction proprement dite, les fours-tunnels des genres ci-dessus sont, en fait, constitués par des gaines co-axiales. La gaine centrale où circule le transporteur est celle dans laquelle les corps traités défilent. De place en place, la gaine centrale comporte des orifices par lesquels les flux d'air sont admis et évacués respectivement. La gaine médiane enveloppe la gaine centrale en ménageant un espace annulaire qui contient les systèmes de circulation et de conduite de l'air, ainsi que les échangeurs de chaleur nécessaires. La gaine extérieure entoure les deux premières en ménageant un second espace annulaire occupé par un isolant thermique. La gaine extérieure et l'isolant thermique peuvent se confondre lorsque l'isolant thermique est autoportant (maçonnerie, pisé, etc...).

En particulier, un exemple de four-tunnel pour le traitement thermique d'objets en verre formé de chambres contiguës est celui qui est décrit dans le brevet des Etats-Unis d'Amérique No. 4.012.190. Ce four-tunnel comporte une enceinte dans laquelle a lieu le traitement thermique. Cette enceinte est divisée en zones successives, traversées par un tapis transporteur en treillis portant les objets et les amenant successivement à travers chacune des zones. Dans la partie supérieure de chaque zone est monté un ventilateur destiné à provoquer une circulation de gaz plus ou moins verticale dans l'enceinte du four-tunnel, et à collecter ce gaz pour l'envoyer ensuite dans un circuit de chauffage et/ou de refroidissement.

L'inconvénient évident d'un four de ce genre est que la température n'y est pas répartie de la façon désirable. En effet, les aspirations axiales créent un flux de gaz convergeant à symétrie de révolution, de sorte que la température n'est pas régulière dans un plan transversal vertical, ce qui a pour conséquence que tous les objets à traiter se trouvant dans une même rangée transversale perpendiculaire au sens du défilement ne subissent pas le même traitement thermique, suivant qu'ils se trouvent au milieu ou sur les côtés du tapis transporteur. En effet les objets situés au milieu du tapis transporteur traversent des courants de gaz ascendants verticaux et subissent ainsi un traitement thermique uniforme. Les objets situés sur les côtés du transporteur par contre, traversent des courants de gaz ascendants d'autant plus obliques qu'ils sont éloignés du milieu du tapis transporteur. Les courants de gaz (obliques) sont provoqués par l'aspiration du ventilateur, situé au milieu de la partie supérieure de chaque zone du four-tunnel et sont d'autant plus obliques que le four-tunnel est large.

Les objets situés sur les côtés du transporteur ne subissent pas par conséquent un traitement thermique uniforme sur toute leur surface extérieure, car, en traversant des courants de gaz ascendants obliques, leur surface ne coupe pas tout entière ces courants de gaz. Il s'en suit un mauvais traitement de recuit et par conséquent des pertes par déchets non négligeables.

Les inconvénients ci-dessus ne sont pas très marqués tant que la largeur du four-tunnel reste relativement faible, mais, comme ces dernieres années la tendance est de construire des fours de largeur de plus en plus importante, en vue d'accroître la capacité de traitement, le problème de la répartition transversale uniforme de la température se pose avec plus d'acuîté, car les déchets provoqués par un mauvais recuit ont augmenté de façon appréciable avec l'utilisation de fours plus larges.

Le but de l'invention est de limiter les pertes exagérées provoquées par un mauvais recuit, en soumettant les objets situés sur une même rangée transversale à un même traitement thermique et en leur faisant suivre le même cycle de variation de température sur toute leur surface extérieure. Ainsi, dans un four suivant l'invention, la température considérée sur une coupe transversale à un endroit donné du four doit être uniforme afin d'être la même aux endroits homologues des corps traités et dans les différents corps passant par cet endroit dans le four. Les objets situés sur une même rangée transversale doivent donc suivre le même cycle de traitement thermique, quelle que soit leur position sur le tapis transporteur.

Pour que le traitement thermique soit convenable, il faut évidemment aussi que la température observée sur une coupe longitudinale respecte un certain profil dont le parcours par les corps à traiter assure le cycle voulu. D'autres critères importants enfin sont la possibilité d'établir et de régler la température à toute valeur désirée en un endroit quelconque du four-tunnel, afin d'adapter le cycle thermique à la nature du produit à traiter, la sûreté de marche, la durabilité de l'installation et l'économie de fonctionnement.

L'invention a dès lors pour objet un four-tunnel généralement horizontal pour le traitement thermique, par convection, de corps distincts en verre creux, du type formé par l'assemblage de tronçons modulaires juxtaposés, l'ensemble de ce four-tunnel comprenant une enceinte de traitement thermique, un transporteur à tapis horizontal disposé dans la zone inférieure de l'enceinte et apte à faire défiler les dits corps, un système apte à créer une circulation transversale de gaz entre les corps a traiter, et un système de chauffage et/ou de refroidissement du gaz apte à régler individuellement la température à une valeur désirée dans chacun des tronçons successifs.

Dans le four-tunnel suivant l'invention chacun des tronçons modulaires comporte:
- des rampes horizontales et parallèles entre elles, occupant toute la largeur de l'enceinte thermique et disposées sous le transporteur parallèlement à celui-ci et perpendiculairement au sens du défilement, aptes à débiter chacune une ou des nappes de gaz ascendant,
- une ou plusieurs fentes collectrices ménagées dans la paroi supérieure, horizontales et parallèles entre elles, occupant toute la largeur de l'enceinte thermique, disposées perpendiculairement au sens du défilement, aptes à collecter les dites nappes de gaz ascendant,
- un circuit de circulation de gaz reliant les dites fentes collectrices aux dites rampes et dans lequel sont intercalés, d'une part
- une soufflante de circulation, apte à faire circuler le gaz collecté par la ou les fentes collectrices et à le renvoyer vers l'ensemble des rampes, et, d'autre part,
un ou plusieurs dispositifs de chauffage et/ou de refroidissement, aptes à amener le gaz collecté à la température désirée dans l'enceinte de traitement thermique du tronçon modulaire concerné.

De manière plus particulière, un ou plusieurs des tronçons modulaires peuvent être équipés d'un dispositif de refroidissement consistant en au moins un orifice obturable communiquant avec l'extérieur et apte à amener de l'air extérieur dans le dit circuit de circulation de gaz, et situé en aval des fentes collectrices et en amont de la soufflante de circulation.

Par ailleurs, les tronçons modulaires ou certains d'entre eux peuvent être équipés d'un dispositif de chauffage consistant en au moins un brûleur, apte à réchauffer l'air débité par la soufflante de circulation, et situé en aval de celle-ci et en amont des rampes. Le four-tunnel est pourvu d'un dispositif de régulation apte à agir sur les dispositifs de chauffage et/ou de refroidissement de chaque tronçon modulaire pour amener et maintenir le gaz collecté à la température désirée dans l'enceinte de traitement thermique du tronçon modulaire concerne.

Suivant une forme de réalisation avantageuse, les rampes débitant les nappes de gaz ascendant sont des tubes qui comportent une ou des ouvertures de débit à leur partie supérieure et qui sont alimentées à leurs extrémités par des canaux d'amenée de gaz.

Dans les différentes formes de réalisation ci-dessus, la soufflante de circulation est alimentée par une boîte à vent dans laquelle débouchent la ou les fentes collectrices qui collectent le gaz.

Suivant une forme de réalisation particulière, chaque tronçon modulaire est muni de deux canaux d'amenée de gaz établis de part et d'autre de celui-ci qui alimentent les rampes en gaz propulsé au moyen de la soufflante de circulation, celle-ci débitant le gaz dans les canaux par un canal transversal commun.

Dans les dessins annexés:
Fig. 1 à 4 illustrent un four connu;
Fig. 5 à 9 illustrent un four conforme à l'invention.
Pour faciliter les comparaisons, on trouvera ci-après la description, faite avec référence aux dessins annexés, d'un four actuellement en vente.

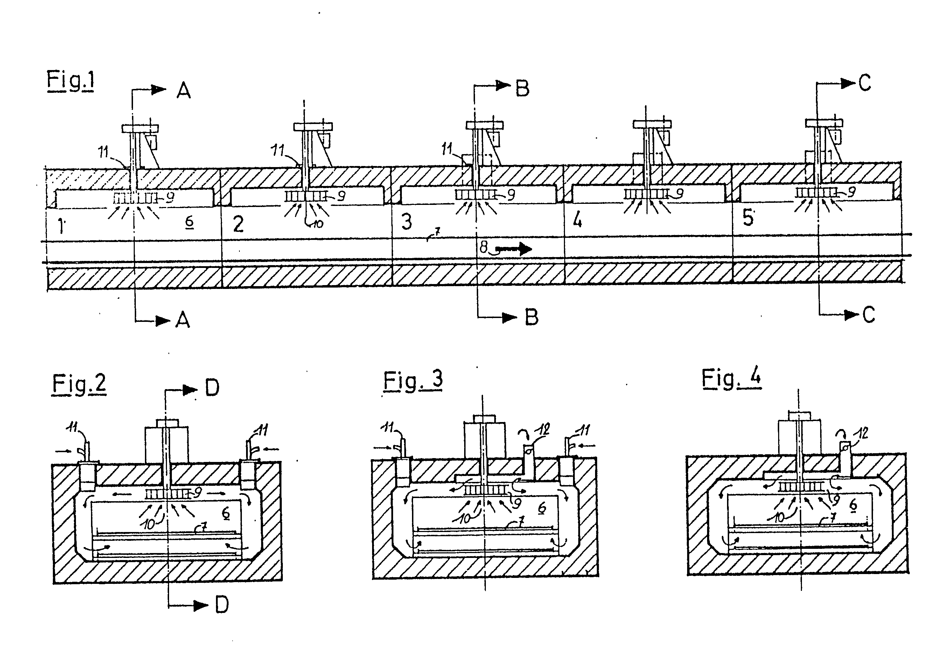

La Fig. 1 représente une coupe longitudinale suivant la ligne D-D de la Fig. 2 d'un four à convection que l'on rencontre actuellement sur le marché.

La Fig. 2 est une vue en coupe suivant la ligne A-A de la Fig. 1, dans laquelle figurent les éléments de chauffage.

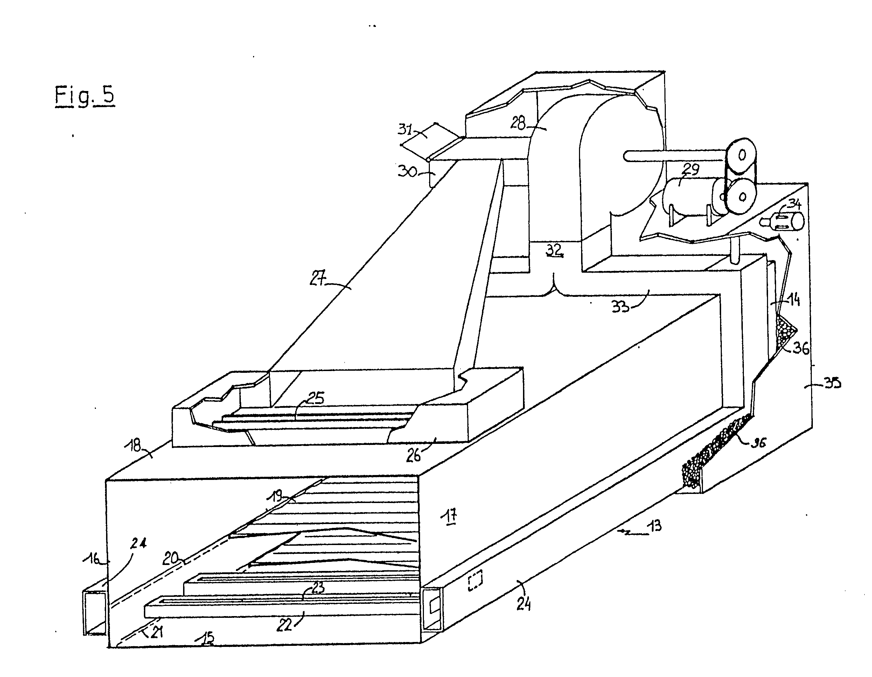

La Fig. 3 est une vue en coupe suivant la ligne B-B de la Fig. 1, dans laquelle figurent les éléments de chauffage et de refroidissement.

La Fig. 4 est une vue en coupe suivant la ligne C-C de la Fig. 1, dans laquelle ne figurent que les éléments de refroidissement.

Le four-tunnel représenté aux Fig. 1, 2, 3 et 4 comprend une enceinte 6 dans laquelle ont lieu le chauffage et le refroidissement. Cette enceinte est divisée en cinq zones successives 1, 2, 3, 4 et 5. Un tapis 7, ayant la forme d'un treillis, se déplace dans la partie inférieure de l'enceinte 6 dans le sens de la flèche 8. Ce tapis amène les objets à chauffer ou à refroidir, non représentés, successivement à travers les zones 1 à 5. Dans la partie supérieure de chacune des zones, est monté un ventilateur 9, de telle façon qu'il puisse provoquer, dans l'enceinte 6, une circulation de gaz ascendante comme indiqué par les flèches 10.

Le ventilateur 9 fait circuler les gaz en un circuit fermé suivant les flèches 10. Dans la partie supérieure et dans les canaux latéraux, sont monté des brûleurs 11 destinés au chauffage des objets. Les gaz sortant de ces brûleurs sont mélanges et entraînés par l'air de recirculation. L'élément de refroidissement 12 injectant de l'air qui est aspiré par le ventilateur 9 est représenté sur les Fig. 3 et 4.

L'inconvénient évident d'un four de ce genre est que la température n'y est pas répartie de la façon désirable. En effet, les aspirations axiales créent un flux d'air convergent à symétrie de révolution, de sorte que la température n'est pas régulière dans un plan transversal vertical. Du fait de cette imperfection il est impossible de faire parcourir par l'ensemble de la charge le cycle thermique nécessaire.

Un four-tunnel modulaire conforme à l'invention est décrit spécifiquement ci-après avec référence aux Fig. 5 à 9.

La Fig. 5 est une vue en perspective (avec arrachements) d'un tronçon modulaire de tunnel indiqué de manière générale en 13, certaines parties étant arrachées pour la mise en évidence de différents détails. Le tronçon modulaire de tunnel 13 comprend essentiellement un caisson 14 en forme de parallélipipède rectangle couché horizontalement sur sa plus grande face 15, délimité latéralement par les deux petites faces 16, 17 et au-dessus par la grande face supérieure 18. Les deux petites faces du parallélipipède ne sont pas matérialisées et constituent les baies par lesquelles les tronçons modulaires de tunnel 13 communiquent les uns avec les autres. Un transporteur à tapis 19 défile dans la partie inférieure du tronçon modulaire de tunnel 13; localement seuls les niveaux de passage 20 et 21 du brin supérieur et du brin inférieur du tapis sont indiqués en pointillés. Le tronçon modulaire de tunnel 13 est équipé d'un jeu de rampes 22 dont chacune est munie d'une fente de débit supérieure 23. Les rampes 22 sont parallèles entre elles et au niveau de passage 20 du tapis 19 et perpendiculaires au sens de défilement de ce dernier. Les rampes 22 débouchent à l'extérieur des petites faces 16 et 17 dans des canaux d'alimentation 24 disposés symétriquement de part et d'autre du tronçon modulaire de tunnel 13 et sur celui- ci. La grande face supérieure 18 est percée d'une fente collectrice 25 qui est orientée comme le sont les rampes 22 et collecte l'air émis par ces dernières. La fente collectrice 25 est coiffée d'une boîte à vent 26 qui est elle-mème raccordée par un conduit convergent 27 à l'admission d'une soufflante centrifuge 28 disposée au-dessus du tronçon modulaire de tunnel 13 et fixée à celui-ci par des moyens non représentés en détail. La soufflante centrifuge 28 est actionnée par un moteur 29. L'admission de la soufflante est également munie d'un orifice 30 pouvant être obturé par un volet 31 pour régler ou annuler une admission d'air frais. La sortie 32 de la soufflante débouche dans un canal transversal 33 alimentant les canaux latéraux 24. Le canal transversal 33 est équipé de brûleurs dont seul le brûleur 34 est indiqué, servant à réchauffer l'air débité par la soufflante et amené par les canaux d'alimentation 24 aux rampes 22.

L'ensemble, à l'exception de la soufflante, de son admission et de son moteur, est abrité dans un caisson extérieur 35 de même forme générale que le tronçon modulaire de tunnel 13 et l'espace intermédiaire est occupé par un isolant thermique 36.

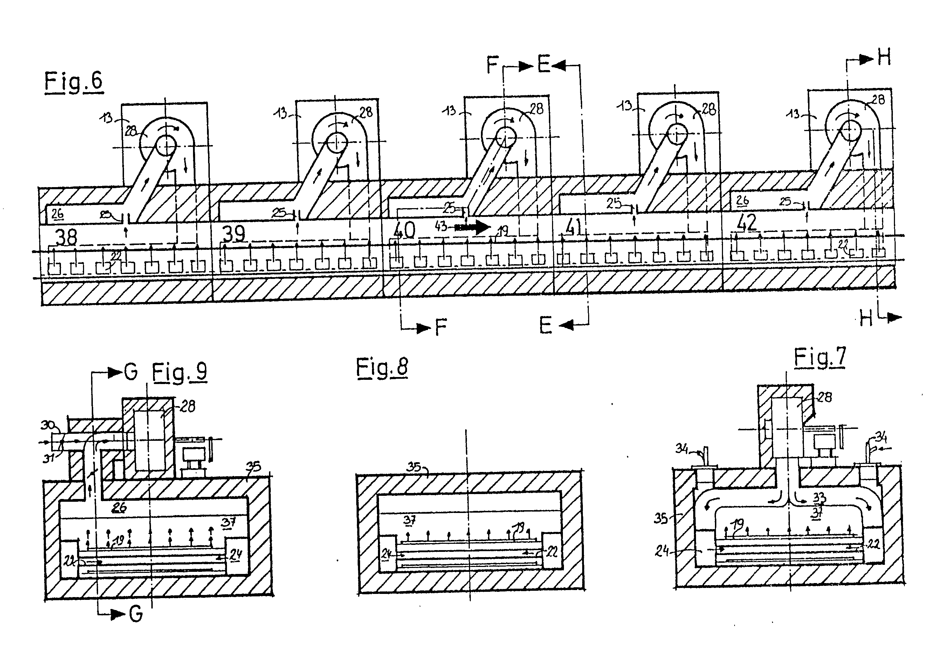

La Fig. 6 représente de manière simplifiée un four-tunnel conforme à l'invention composé de cinq tronçons modulaires de tunnel 13; elle est une vue en coupe longitudinale suivant la ligne G-G de la Fig. 9 du four ainsi constitué.

La Fig. 7 est une vue en coupe suivant la ligne H-H de la Fig. 6 montrant les brûleurs 34. La Fig. 8 est une vue en coupe suivant la ligne E-E de la Fig. 6 montrant les tuyaux à fente continue ou rampes 22 qui assurent la répartition homogène des différentes veines d'air.

La Fig. 9 est une vue en coupe suivant la ligne F-F de la Fig. 6 montrant le dispositif d'aspiration d'air frais de l'enceinte.

Le four-tunnel conforme à l'invention (voir Fig. 6 et 7) comprend, par conséquent, une enceinte générale 37 dans laquelle ont lieu le chauffage et/ou le refroidissement. Cette enceinte générale 37 est répartie en cinq zones successives 38, 39, 40, 41 et 42, dont chacune est matérialisée par un tronçon modulaire de tunnel. Le transporteur à tapis 19 sous forme de treillis défile dans la partie inférieure de l'enceinte générale 37 dans le sens de la flèche 43. Ce tapis 19 fait défiler les objets à chauffer ou refroidir (qui ne sont pas représentés) successivement dans les zones 38 à 42. Il est ainsi apparent que, dans chacune des zones, une soufflante centrifuge 28 refoule l'air par le canal transversal 33 dans les canaux d'alimentation 24 dans lesquels débouchent les rampes 22. Les veines d'air émises uniformément par les rampes 22 sont reprises dans chaque zone par une fente collectrice 25 et retournent ainsi en circuit fermé aux canaux 24.

Dans les zones de chauffage, les tronçons modulaires de tunnel sont équipés de brûleurs 34 en amont des canaux 24 de manière que les gaz de combustion se mélangent intimement à l'air en circulation.

L'appareil de l'invention permet également que les objets à traiter introduits dans l'enceinte générale 37 soient refroidis par dilution de l'atmosphère de cette enceinte générale au moyen d'un gaz d'appoint, en particulier de l'air extérieur aspiré à l'aide des soufflantes centrifuges 28 par leurs orifices 30, la quantité d'air extérieur admise étant réglée par la position des volets 31 (Fig. 5 et 9).

Les brûleurs 34 peuvent évidemment être remplacés par d'autres appareils, par exemple des résistances électriques.

Des serpentins situés dans le circuit de circulation des gaz et dans lesquels circule un fluide peuvent également être utilisés avantageusement. En effet selon les besoins, le fluide circulant dans ces serpentins peut être chaud ou froid. Ainsi un même dispositif peut servir à la fois pour le chauffage ou pour le refroidissement des gaz circulant dans l'enceinte d'un tronçon modulaire, suivant la température voulue pour le traitement thermique.

L'appareil de l'invention est pourvu d'un dispositif de régulation non représenté dans les figures qui permet de choisir de façon simple la courbe de température pour obtenir le traitement thermique voulu. Ainsi pour chacun des tronçons le dispositif de régulation agit sur le système de chauffage (alimentation des brûleurs, rhéostats des resistances électriques ou vannes des serpentins) lorsque la température désirée dans le tronçon concerné est élevée (chauffage de recuit), par contre lorsque la température est relativement plus basse (refroidissement) le dispositif de régulation agit sur l'admission de l'air extérieur (orifices obturables communiquant avec l'extérieur 30).

D'autre part, la fente collectrice 25 a pour effet de rassembler les veines de gaz à la forme générale d'un jeu de dièdres présentant une arête commune, mais il va de soi qu'il est également possible de réaliser un tronçon modulaire de tunnel 13 comportant plusieurs fentes collectrices 25 rassemblant les veines de gaz en plusieurs dièdres. Dans ce dernier cas, les veines de gaz sont plus sensiblement verticales.

La soufflante de circulation 28 a été représentée dans les figures décrivant l'appareil de l'invention avec un axe horizontal. Il va de soi que l'invention ne se limite pas à cette forme de réalisation et que le four-tunnel suivant l'invention peut également être équipé de soufflantes à axe vertical.

Certains détails de réalisation qui ne sont pas indispensables à la compréhension du principe de l'invention n'ont pas été représentés, par exemple les canaux d'alimentation 24 peuvent abriter des déflecteurs permettant d'ajuster à volonté le flux d'air par chacune des rampes 22. En variante, chacune des rampes 22 peut être conçue sous la forme d'un canal en U ouvert à sa partie supérieure et muni d'une coiffe à fente unique posée sur la partie ouverte du U. Ce système permet d'utiliser des coiffes munies de fentes de différentes largeurs pour influencer également le débit par les diverses rampes.

## Revendications

1.- Four-tunnel horizontal pour le traitement thermique, par convection, de corps distincts en verre creux, formé par l'assemblage de tronçons modulaires (13) juxtaposés, l'ensemble de ce four-tunnel comprenant une enceinte de traitement thermique (37), un transporteur à tapis horizontal (19) disposé dans la zone inférieure de l'enceinte (37) et apte à faire défiler les dits corps, un système apte à créer une circulation transversale de gaz entre les corps à traiter, et un système de chauffage et/ou de refroidissement du gaz apte à regler individuellement la température à une valeur desirée dans chacun des tronçons successifs, caractérisé en ce que chacun des dits tronçons modulaires (13) comporte:
- des rampes (22) horizontales et parallèles entre elles, occupant toute la largeur de l'enceinte thermique (37) et disposées sous le transporteur (19) parallèlement à celui-ci et perpendiculairement au sens du défilement, aptes à débiter chacune une ou des nappe(s) de gaz ascendant,
- une ou plusieurs fentes collectrices (25) ménagées dans la paroi supérieure, horizontales et parallèles entre elles, occupant toute la largeur de l'enceinte thermique (37), disposées perpendiculairement au sens du défilement, aptes à collecter les dites nappes de gaz ascendant,
- un circuit de circulation de gaz (32,24,22) reliant les dites fentes collectrices (25) aux dites rampes (22), et dans lequel sont intercalés, d'une part
- une soufflante de circulation (28), apte à faire circuler le gaz collecté par la ou les fentes collectrices (25) et à le renvoyer vers l'ensemble des rampes (22), et, d'autre part,
- un ou plusieurs dispositifs de chauffage et/ou de refroidissement (30,34), apte(s) à amener le gaz collecté à la température désirée dans l'enceinte de traitement thermique du tronçon modulaire concerne.

2.- Four-tunnel suivant la revendication 1, caractérisé en ce que dans le dit circuit de circulation de gaz (32,24,22) est intercalé au moins un dispositif de refroidissement consistant en au moins un orifice obturable (30) communiquant avec l'extérieur et apte à amener de l'air extérieur dans le dit circuit de circulation de gaz (32,24,22), et situé en aval des fentes collectrices (25) et en amont de la soufflante de circulation (28).

3.- Four-tunnel suivant l'une quelconque des revendications précédentes, caractérisé en ce que dans le dit circuit de circulation de gaz (32,24,22) est intercalé au moins un dispositif de chauffage consistant en au moins un brûleur (34), apte à réchauffer l'air débité par la dite soufflante de circulation (28) et situé en aval de la dite soufflante (28) et en amont des dites rampes (22).

4- Four-tunnel suivant l'une quelconque des revendications, caractérisé en ce qu'il est pourvu d'un dispositif de regulation, apte à agir sur les dispositifs de chauffage et/ou de refroidissement (30, 34) de chaque tronçon modulaire (13) pour amener et maintenir le gaz collecté à la température désirée dans l'enceinte de traitement thermique du tronçon modulaire (13) concerné.

5.- Four-tunnel suivant l'une quelconque des revendications précédentes, caractérisé en ce que les rampes (22) sont des tubes qui comportent une ou des ouverture de débit (23) à leur partie supérieure et qui sont alimentés à leurs extremités par des canaux d'amenée de gaz (24).

6.- Four-tunnel suivant l'une quelconque des revendications précédentes, caractérisé en ce que la soufflante de circulation (28) est alimentée par une boîte à vent (26) dans laquelle debouchent la ou les fente(s) collectrice(s) (25).

7.- Four-tunnel suivant l'une quelconque des revendications précédentes, caractérisé en ce que deux canaux d'amenée de gaz (24) établis de part et d'autre du tronçon modulaire (13) alimentent les rampes (22) en gaz propulsé au moyen de la soufflante de circulation (28), celle-ci debitant le gaz dans les canaux (24) par un canal transversal commun (33).

## Patentansprüche

1. Horizontaler Tunnelofen zur Wärmebehandlung von einzelnen hohlen Glaskörpern durch Konvektion, der aus aneinanderstoßenden Modulabschnitten (13) zusammengesetzt ist, wobei der Tunnelofenaufbau ein Wärmebehandlungsgehäuse (37), ein in der unteren Zone des Gehäuses (37) angeordnetes horizontales Transportband (19) für den Vorschub der Körper, eine Einrichtung zur Erzeugung einer Gasquerströmung zwischen den zu behandelnden Körpern und eine Einrichtung zum Erhitzen und/oder Abkühlen des Gases aufweist, welche die Temperatur in jedem der aufeinanderfolgenden Modulabschnitte individuell auf einen gewünschten Wert regelt, dadurch gekennzeichnet, daß jeder der Modulabschnitte (13) folgendes aufweist:

- horizontale und untereinander parallele Rampen (22), welche die gesamte Breite des Wärmebehandlungsgehäuses (37) einnehmen und unter dem Förderer (19) parallel zu diesem und senkrecht zur Förderrichtung angeordnet sind, wobei sie je einen oder mehrere aufsteigende Gasschichten abgeben,

- einen oder mehrere horizontale und untereinander parallele Sammelschlitze (25), die in der oberen Wand ausgebildet sind, die gesamte Breite des Wärmebehandlungsgehäuses (37) einnehmen, senkrecht zur Förderrichtung verlaufen und zum Sammeln der aufsteigenden Gasschichten dienen,

- einen Gasströmungskreis (32, 24, 22), welcher die Sammelschlitze (25) mit den Rampen (22) verbindet und in den einerseits

- ein Zirkulationsgebläse (28) zur Zirkulation von durch den Sammelschlitz oder die Sammelschlitze (25) gesammeltem Gas und zum Rückleiten desselben zur Anordnung von Rampen (22), und anderseits

- eine oder mehrere Heiz- und/oder Kühleinrichtungen (30, 34) eingeschaltet sind, welche das gesammelte Gas im Wärmebehandlungsgehäuse des betreffenden Modulabschnittes auf die gewünschte Temperatur bringen.

2. Tunnelofen nach Anspruch 1, dadurch gekennzeichnet, daß in den Gasströmungskreis (32, 24, 22) zumindest eine Kühleinrichtung eingeschaltet ist, die zumindest eine verschließbare Öffnung (30) aufweist, welche mit der Umgebung in Verbindung steht und befähigt ist, Umgebungsluft in den Gasströmungskreis (32, 24, 22) zu leiten, und die stromabwärts der Sammelschlitze (25) und stromaufwärts des Zirkulationsgebläses (28) angeordnet ist.

3. Tunnelofen nach Anspruch 1 oder 2, dadurch gekennzeichnet, daß in den Gasströmungskreis (32, 24, 22) zumindest eine Heizeinrichtung eingeschaltet ist, die zumindest einen Brenner (34) zum Erhitzen der vom Zirkulationsgebläse (28) abgegebenen Luft aufweist und stromabwärts des Gebläses (28) sowie stromaufwärts der Rampen (22) angeordnet ist.

4. Tunnelofen nach einem der vorhergehenden Ansprüche, dadurch gekennzeichnet, daß er mit einer Regeleinrichtung ausgestattet ist, die auf die Heiz- und/oder Kühleinrichtungen (30, 34) jedes Modulabschnittes (13) einwirkt, um das gesammelte Gas im Wärmebehandlungsgehäuse des betreffenden Modulabschnittes (13) auf der gewünschten Temperatur zu bringen und auf dieser zu halten.

5. Tunnelofen nach einem der vorhergehenden Ansprüche, dadurch gekennzeichnet, daß die Rampen (22) durch Rohre gebildet sind, die in ihrem Oberteil eine oder mehrere Abgabeöffnungen (23) aufweisen und an ihren Enden durch Gaszufuhrkanäle (24) gespeist sind.

6. Tunnelofen nach einem der vorhergehenden Ansprüche, dadurch gekennzeichnet, daß das Zirkulationsgebläse (28) von einem Windkasten (26) gespeist ist, in welchen der oder die Sammelschlitze (25) münden.

7. Tunnelofen nach einem der vorhergehenden Ansprüche, dadurch gekennzeichnet, daß zwei Gaszufuhrkanäle (24), die zu beiden Seiten des Modulabschnittes (13) vorgesehen sind, die Rampen (22) mit vom Zirkulationsgebläse (28) geliefertem Gas speisen, wobei das Gebläse das Gas über einen gemeinsamen Querkanal (33) an die Kanäle (24) abgibt.

## Claims

1.- A horizontal tunnel furnace for heat treatment by convection of separate bodies of hollow glass, the furnace being formed by the assembly of juxtaposed modular sections (13) and comprising as a whole a heat treatment enclosure (37), a horisontal conveyor belt (Ig) disposed in the lower part of the enclosure and adapted for advancing said bodies, a system adapted for creating a transverse gas circulation between the bodies to be treated and a gas heating and/or cooling system adapted for individually regulating the temperature at a desired value in each of the successive sections, characterized in that each of said modular sections (13) comprises:

- a plurality of horizontal and mutually parallel flues (22) substantially occupying the width of the heat treatment enclosure (37) beneath the conveyor (19) oriented in a direction parallel to the conveyor and perpendicular to the direction of travel and adapted to unit one or more sheets of ascending gas;

- one or more collecting flues (25) arranged in the upper wall, horizontal and mutually parallel, substantially occupying the entire width of the heat treatment enclosure (37) oriented in a direction perpendicular to the direction of travel and adapted to collect the sheets of ascending gas;

- a gas circulation path (32, 24, 22) connecting the said collecting flues (25) to the said flues (22) and which is provided on one hand with

- a circulating fan (28) for circulating the gas collected by the gas collecting flue(s) (25) and returning the gas to the flues (22) and, on the other hand, with

- one or more heating and/or cooling devices (30, 34) for bringing the collected gas to the temperature desired in the heat treatment enclosure of the modular section.

2.- A tunnel furnace according to claim 1, characterized in that there is provided in said gas circulation path (32, 24, 22) at least one cooling device comprised of at least one regulating orifice (30) communicating with the exterior and allowing external air to be brought into the gas circulation path (32, 24, 22) and situated downstream from the gas collecting flues (25) and upstream from the circulating fan (28).

3.- A tunnel furnace according to any of the preceding claims, characterized in that there is provided in said gas circulation path (32, 24, 22) at least one heating device comprising at least one burner (34) heating the air collected by said circulating fan (28) and situated downstream from the said circulating fan (28) and upstream from the said flues (22).

4.- A tunnel furnace according to any of the preceding claims, characterized in that the tunnel furnace is provided with a regulating device for controlling the heating and/or cooling devices (30, 34) of each modular section (13) to take and maintain the collected gas to the desired temperature in the heat treatment enclosure of the said modular section (13).

5.- A tunnel furnace according to any of the preceding claims, characterized in that the flues (22) are tubes which have one or more output slots (23) in the upper part and are supplied at their ends by gas supply channels (24).

6.- A tunnel furnace according to any of the preceding claims, characterized in that the circulating fan (28) is supplied by a windchest (26) which itself is connected with the collecting flue(s).

7.- A tunnel furnace according to any of the preceding claims, characterized in that two gas supply channels (24), which are disposed on either side of the modular section (13), supply the flues (22) with gas blown by the circulating fan (28) which deliver the gas in the feed channels (24) by a common transverse channel (33).

Fig.1

Fig.2

Fig.3

Fig.4

Fig. 5

0 090 790

Fig. 6

Fig. 9

Fig. 8

Fig. 7

0 090 790